# DEMANDE DE BREVET EUROPEEN

(11) **EP 3 805 412 A1**
(43) Date de publication de la demande: **14.04.2021**
(21) Numéro de dépôt: 20201048.4
(22) Date de dépôt: 09.10.2020
(51) Int. Cl.: C22B 3/00

(54) **PROCEDE DE SEPARATION SELECTIVE DU COBALT**

(30) Priorité: 10.10.2019 FR 1911249
(71) Demandeur: Commissariat à l'énergie atomique et aux énergies alternatives, 75015 Paris (FR)
(72) Inventeur: BILLY, Emmanuel, 38054 GRENOBLE CEDEX 09 (FR)
(74) Mandataire: Brevalex

(57) **Abrégé**

Procédé de séparation sélective de cobalt comprenant les étapes successives suivantes :
- fourniture d'une solution à traiter contenant des ions cobalt et des ions additionnels choisis parmi des ions métalliques, des ions de métaux alcalins et/ou des ions de terres rares, la solution ayant un pH allant de 1,5 à 4,
- ajout d'un sel de peroxomonosulfate à la solution à traiter, moyennant quoi on fait précipiter sélectivement les ions cobalt sous forme d'oxyhydroxyde de cobalt.

## Description

### DOMAINE TECHNIQUE

La présente invention se rapporte au domaine général de la séparation sélective du cobalt à partir d'une solution à traiter contenant un ou plusieurs autres éléments métalliques.

L'invention trouve des applications dans de nombreux domaines industriels, et notamment pour le recyclage des batteries Li-Ion, des aimants, des bains d'électrolyse, pour extraire sélectivement du cobalt de nodules polymétalliques ou encore dans le traitement des effluents d'usines de traitement de minerais.

L'invention est particulièrement intéressante puisqu'elle permet d'extraire simplement et sélectivement du cobalt d'une matrice polymétallique avec une très forte efficacité.

### ÉTAT DE LA TECHNIQUE ANTÉRIEURE

Actuellement, le cobalt est utilisé dans de nombreux domaines, notamment pour former de nombreux alliages, dans les batteries Li-ion comme matériaux de cathode en mélange avec du nickel, du manganèse, ou en tant que catalyseur.

En raison des risques de rupture en approvisionnement de cobalt et de son importance d'un point de vue industrielle, il est essentiel de pouvoir le récupérer et le valoriser en vue de sa réutilisation.

Cependant, la séparation sélective du cobalt d'une solution contenant plusieurs espèces métalliques est complexe, en particulier lorsque la solution contient également du nickel dont la chimie est très proche de celle du cobalt.

Parmi les méthodes de séparation les plus répandues, on peut citer :
- les procédés sous pression qui consistent à réaliser, d'une part, une étape d'oxydation avec de l'oxygène sous pression et, d'autre part, une étape de réduction par de l'hydrogène, ce qui nécessite l'emploi de pressions élevées et rend les installations coûteuses,
- les méthodes utilisant des résines échangeuses d'ions; ces méthodes sont difficilement industrialisable d'un point de vue économique à cause des coûts des résines et des réactifs nécessaire à l'élution et/ou à la régénération des résines. De plus, la capacité des résines est limitée, ce qui limite son intérêt pour des concentrations faibles (quelques mg/L en cobalt),
- les méthodes d'extraction par solvant (ou extraction liquide/liquide) qui nécessitent des molécules complexes et des solvants organiques, ce qui représente un frein économique et/ou environnemental.

Afin de remédier à ces inconvénients, récemment des procédés mettant en œuvre une précipitation oxydante se sont développés. La précipitation oxydante consiste à oxyder les ions dissous, avec un oxydant, et à former un solide de cobalt. Les oxydants conventionnels sont : le dioxyde de soufre avec l'oxygène (SO₂/O₂), le permanganate de potassium (KMnO₄), l'hypochlorite de sodium (NaClO), le chlore (Cl₂ gazeux), l'ozone ou un mélange d'acide sulfurique et de peroxyde d'hydrogène (H₂SO₄/H₂O₂).

Par exemple, dans le document US 4,965,116 A1, le cobalt est séparé par précipitation oxydante à partir d'une solution acide composée de chlorures, de cobalt et de nickel. Le pH est ajusté entre 3 et 5 par ajout d'hypochlorite de sodium et d'une base (solution de soude à 50% en poids). L'efficacité de séparation est modérée, elle va de 60% à 90% et le produit final peut être contaminé par des ions chlorures, le rendant inapte à certaines utilisations.

Selon un autre exemple, le document FR 2495602 A1 décrit un procédé de séparation de cobalt et de nickel dans des solutions aqueuses acides qui contiennent un mélange de ces éléments. L'oxydation est obtenue en ajoutant progressivement à la solution l'acide de Caro (un mélange de peroxyde d'hydrogène aqueux avec de l'acide peroxomonosulfurique). Le pH est maintenu entre 3,1 et 4,7 par introduction d'hydroxyde, de bicarbonate ou de carbonate de métal alcalin. Pour obtenir de bons résultats, il ne faut pas utiliser plus d'une mole de peroxyde d'hydrogène pour 10 moles d'acide peroxomonosulfurique.

Cependant, ces procédés présentent au moins l'un des inconvénients suivants :
- l'utilisation d'acide concentrés, par exemple de mélanges de peroxyde d'hydrogène 70% et de H₂SO₄ 98% et/ou de bases concentrées pour asservir le pH représente des risques pour les opérateurs et les installations, et il est nécessaire de traiter les effluents résultants, ce qui impacte les aspects économiques et environnementaux,
- les acides concentrés se décomposent dans le temps, ce qui complique le stockage des produits,
- la présence simultanée des chlorures et des solutions acides concentrées est un frein à l'industrialisation vis-à-vis des risques et des coûts pour les installations et les opérateurs.

### EXPOSÉ DE L'INVENTION

Un but de la présente invention est de proposer un procédé d'extraction du cobalt, remédiant aux inconvénients de l'art antérieur, et en particulier un procédé d'extraction, propre, permettant de récupérer, rapidement et efficacement, le cobalt à partir d'une solution multi-métallique pouvant contenir, par exemple, du nickel.

Pour cela, la présente invention propose un procédé de séparation sélective de cobalt comprenant les étapes successives suivantes :
- fourniture d'une solution à traiter contenant des ions cobalt et des ions additionnels choisis parmi des ions métalliques, des ions de métaux alcalins et/ou des ions de terres rares, la solution ayant un pH allant de 1,5 à 4,
- ajout d'un sel de peroxomonosulfate à la solution à traiter, moyennant quoi on fait précipiter sélectivement les ions cobalt sous forme d'oxyhydroxyde de cobalt.

L'invention se distingue fondamentalement de l'art antérieur par la mise en œuvre d'une étape de précipitation oxydante au cours de laquelle on utilise un sel de peroxomonosulfate afin de séparer sélectivement le cobalt Co(II) d'une solution contenant d'autres ions. Le cobalt est extrait sous la forme d'un précipité d'oxohydroxyde de cobalt (CoOOH) pouvant être facilement transformé en oxyde de cobalt (CoO₂) et être ainsi valorisé.

Avec de telles gammes de pH, un effet synergique est observé entre le sel de peroxomonosulfate (HSO₅⁻) et les ions cobalt(II). Le peroxomonosulfate et l'ion cobalt (II) sont des composés actifs qui vont réagir ensemble pour former des espèces fortement oxydantes (comme des radicaux ou du cobalt(III)) et augmenter la réactivité du peroxomonosulfate (par exemple, d'au moins d'un facteur 10). La combinaison de ces éléments catalyse l'extraction sélective du cobalt.

Seul le sel de peroxomonosulfate est consommé durant le processus. Avantageusement, la solution à traiter peut ensuite être soumise à un autre procédé, par exemple, en vue de valoriser un autre élément présent dans la solution à traiter. Avantageusement, on pourra valoriser d'autres éléments comme le nickel.

Avantageusement, un asservissement est réalisé avec une base, par exemple NaOH, Na₂CO₃ ou NH₄OH, pour maintenir le pH de la solution à traiter. Ceci permet d'assurer un pH stable. De préférence, on choisira Na₂CO₃ sous forme solide pour éviter de former des effluents.

Avantageusement, le pH de la solution à traiter va de 2 à 3.

Avantageusement, la solution à traiter comprend plus de 0,5g/L de cobalt, et de préférence plus de 1g/L. Avec ce procédé, il est possible de traiter des solutions faiblement concentrées en cobalt.

Selon une première variante de réalisation avantageuse, le sel de peroxomonosulfate est introduit sous forme liquide.

Selon une autre variante de réalisation avantageuse, le sel de peroxomonosulfate est introduit sous forme solide. Ceci limite la quantité d'effluents.

Avantageusement, le sel peroxomonosulfate est introduit à un débit allant de 0,1g/min/L_{solution à traiter} à 30g/min/L_{solution à traiter}, et de préférence de 1g/min/L_{solution à traiter} à 10g/min/L_{solution à traiter}.

Avantageusement, la température va de 20°C à 95°C, et de préférence de 40°C à 80°C, par exemple de l'ordre de 50°C.

Avantageusement, les ions additionnels sont des ions nickel.

Avantageusement, le sel de peroxomonosulfate est un peroxomonosulfate de potassium. De préférence, il s'agit du sel triple de peroxomonosulfate de potassium. Ce composé est stable, peu coûteux et est simple à utiliser.

Avantageusement, la solution à traiter est obtenue par dissolution d'une électrode de batterie Li-ion. Il peut s'agir, avantageusement, d'une électrode nickel-manganèse-cobalt (NMC).

Le procédé présente de nombreux avantages :
- réduire l'impact environnemental : pas de génération de gaz toxiques, une faible consommation énergétique, et une diminution très importante des effluents puisque, d'une part, le procédé ne nécessite pas de solutions acides et, d'autre part, le sel de peroxomonosulfate a une très grande solubilité ; un gain de 50% en volume a pu être constaté,
- le procédé est plus efficace par rapport aux procédés de l'art antérieur puisqu'il n'y a pas d'effet de dilution,
- le sel dissout en solution est très stable par rapport à un mélange d'acides,
- réduire le coût du traitement (prix des sels, diminution des risques pour les installations, etc...),
- simplifier le procédé et le rendre plus facilement industrialisable car les espèces ne sont pas dangereuses et sont faciles à manipuler,
- extraire sélectivement le cobalt vis-à-vis de nombreuses espèces valorisables comme le nickel, permettant ainsi de traiter des solutions avec des matrices complexes, avec une très bonne efficacité,
- ne pas réduire les métaux en solution, avant leur séparation, comme cela peut être le cas avec la préparation in situ d'un mélange de peroxyde d'hydrogène aqueux avec de l'acide peroxomonosulfurique.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### EXPOSÉ DÉTAILLÉ DE MODES DE RÉALISATION PARTICULIERS

Bien que cela ne soit aucunement limitatif, l'invention trouve particulièrement des applications dans le domaine du recyclage et/ou de la valorisation des électrodes à base de nickel des batteries/accumulateurs/piles en particulier de type Li-ion, des aimants, des bains d'électrolyse, des nodules polymétalliques des fonds sous-marins ou encore des effluents d'usines de traitement de minerais comme la latérite.

De préférence, la solution à traiter provient de la dissolution d'une matrice polymétallique, notamment une électrode de batterie, en particulier une cathode d'une batterie Li-ion.

Le procédé selon l'invention conduit à la séparation sélective du cobalt des autres espèces contenues dans une solution à traiter.

Les autres espèces en solution peuvent être des métaux, des métaux alcalins et/ou des terres rares. A titre d'exemple illustratif et non limitatif, on peut citer les éléments suivants : Ni, Mn, Li, Zn, Al, Mg, Cu, Ca, Pb, Cd, La, Nd et Ce. De préférence, la solution à traiter contient, en plus du cobalt, au moins du nickel.

La solution est, de préférence, une solution aqueuse.

Selon une autre variante de réalisation, il pourrait s'agir d'une solution organique.

De préférence, la concentration en cobalt, dans la solution à traiter, est supérieure à 0,5g/L et encore plus préférentiellement supérieure à 1g/L. De préférence, la concentration en cobalt est inférieure à 50g/L et encore plus préférentiellement inférieure à 40g/L pour éviter les effets d'entrainement qui réduiraient la pureté du produit final.

Le procédé de séparation sélective du cobalt comprend une étape au cours de laquelle on ajoute à la solution à traiter un sel de peroxomonosulfate (HSO₅⁻), la solution à traiter étant à un pH allant de 1,5 à 4.

Le sel de peroxomonosulfate, aussi appelé hydrogénopersulfate ou peroxymonosulfate, est un composé peu couteux et à faible impact environnemental. Le composé est stable, et peut être manipulé sans risques ou précautions importantes, contrairement aux autres procédés de l'art antérieur (Cl₂, O₃, SO₂/O₂,...). Les sous-produits de la réaction sont essentiellement des sulfates ce qui est un avantage, vis-à-vis de procédés à base de chlorures (génération de Cl₂). La précipitation oxydante est sélective et efficace.

De préférence, il s'agit d'un sel de peroxomonosulfate de potassium. Il peut s'agir d'un sel triple. La formule du sel triple de peroxomonosulfate de potassium est

2KHSO₅ • KHSO₄ • K₂SO₄. Un tel produit est, par exemple, commercialisé sous la référence Oxone®. On peut également utiliser le sel triple de peroxomonosulfate de potassium commercialisé sous la référence Caroat®.

Il pourrait également s'agir d'un sel de peroxomonosulfate de sodium.

Selon une première variante de réalisation, le sel de peroxomonosulfate peut être introduit sous forme liquide. Il est, par exemple, solubiliser préalablement dans de l'eau. Il présente l'avantage d'être très soluble dans l'eau (250g/L), ce qui réduit la quantité d'effluents issus du procédé.

Selon une deuxième variante de réalisation, le sel de peroxomonosulfate est introduit sous forme de solide dans la solution à traiter. Ceci évite d'ajouter un solvant aqueux dans la solution à traiter.

Avantageusement, le sel de peroxomonosulfate est introduit avec un débit allant de 0,1g par minute par litre de solution (g/min/Lₛₒₗᵤₜᵢₒₙ) à 30g/min/Lₛₒₗᵤₜᵢₒₙ et préférentiellement de 1 à 10 g/min/Lₛₒₗᵤₜᵢₒₙ.

La solution à traiter est à un pH allant de 1,5 à 4 pour former des ions Co(III), et les faire précipiter sous la forme d'un oxohydroxyde de cobalt CoOOH (aussi appelé oxydroxyde de cobalt), en présence du sel de peroxomonosulfate. De préférence, le pH va de 2 à 3. On choisira par exemple un pH de l'ordre de 3.

Pour assurer un pH stable, un asservissement est réalisé durant l'introduction du sel de peroxomonosulfate. L'asservissement peut être réalisé avec une base de type NaOH, Na₂CO₃ ou encore NH₄OH. La base peut être introduite sous forme liquide ou solide. On choisit, avantageusement, le carbonate de sodium sous forme solide pour réduire les effluents.

La température de traitement peut aller de 20°C à 95°C, de préférence de 30°C à 90°C, et encore plus préférentiellement de 40°C à 80°C. Par exemple, on choisit une température au voisinage de 50°C.

Le procédé est, avantageusement, réalisé à pression ambiante (i.e. de l'ordre de 1bar).

A l'issue du procédé, on récupère, avantageusement, les autres éléments demeurant dans la solution à traiter, comme par exemple le nickel, qui présente également une forte valeur ajoutée.

### Exemples illustratifs et non limitatifs d'un mode de réalisation :

### Exemple 1 : Séparation sélective du cobalt dans une matrice de nickel par injection liquide de peroxomonosulfate avec asservissement en soude 5M

La solution à traiter est une solution d'acide sulfurique de 80 mL à pH=3,035 dans laquelle on a introduit 5,7 g/L de Co(II) et 28,7 g/L de Ni(II).

Une solution d'Oxone® à 250 g/L est injectée avec un débit de 0,25mL/min dans la solution à traiter, par un système de pousse seringue. En parallèle, un asservissement en soude à 5M est mis en place pour réguler le pH autour de la valeur de consigne. Le milieu est à une température de 25°C sous une agitation de 400tour/min. L'injection est réalisée jusqu'à obtenir la stœchiométrie théorique pour l'oxydation de Co²⁺ en CoO₂. L'essai est alors arrêté.

Un prélèvement est réalisé en solution. Le solide obtenu est récupéré et analysé par une technique à plasma induit (ICP pour « Inductively Coupled Plasma »). La concentration en cobalt est de 0,3g/L.

L'efficacité est de 90% en cobalt extrait et de 0,94% en nickel.

### Exemple 2 : Séparation sélective du cobalt dans une matrice de nickel par injection solide de peroxomonosulfate avec asservissement en soude 10M

La solution à traiter est une solution d'acide sulfurique de 450mL à pH=3,0 dans laquelle on a introduit 20,6 g/L de Co(II) et 20,32 g/L de Ni(II).

Une poudre d'Oxone® est injectée avec un débit de 350 mg/min dans la solution. En parallèle un asservissement en soude 10M est mis en place pour réguler le pH autour de la valeur de consigne. Le milieu est à la température de 50°C sous une agitation de 400tour/min. L'injection est réalisée jusqu'à obtenir 100% de cobalt extrait, ce qui intervient à la stœchiométrie de 0,69 considérant une oxydation de Co²⁺ en CoO₂. La mesure ICP de la concentration en cobalt est de 0,104 g/L.

L'efficacité est de 99,45% en cobalt extrait et de 1,40% en nickel.

### Exemple 3 : Séparation sélective du cobalt dans une matrice de nickel par injection solide de peroxomonosulfate avec asservissement solide en carbonate de sodium

La solution à traiter est une solution d'acide sulfurique de 450mL à pH=3,0 dans laquelle on a introduit 10,1 g/L de Co(II) et 9,92 g/L de Ni(II).

Une poudre d'Oxone® est injectée avec un débit de 350 mg/min dans la solution. En parallèle un asservissement en poudre de carbonate de sodium est mis en place pour réguler le pH autour de la valeur de consigne. Le milieu est à la température de 48,6°C sous une agitation de 400tour/min. L'injection est réalisée jusqu'à obtenir 100% de cobalt extrait, ce qui intervient à la stœchiométrie de 0,88 considérant une oxydation de Co²⁺ en CoO₂. La mesure ICP de la concentration en cobalt est de 0,058 g/L.

L'efficacité est de 99,43% en cobalt extrait et de 0% en nickel.

## Revendications

1. Procédé de séparation sélective de cobalt comprenant les étapes successives suivantes :
- fourniture d'une solution à traiter contenant des ions cobalt et des ions additionnels choisis parmi des ions métalliques, des ions de métaux alcalins et/ou des ions de terres rares, la solution ayant un pH allant de 1,5 à 4,
- ajout d'un sel de peroxomonosulfate à la solution à traiter, moyennant quoi on fait précipiter sélectivement les ions cobalt sous forme d'oxyhydroxyde de cobalt.

2. Procédé selon la revendication, **caractérisé en ce qu'**un asservissement est réalisé avec une base, par exemple NaOH, Na₂CO₃ ou NH₄OH, pour maintenir le pH de la solution à traiter.

3. Procédé selon l'une des revendications précédentes, **caractérisé en ce que** le pH de la solution à traiter va de 2 à 3.

4. Procédé selon l'une quelconque des revendications précédentes, **caractérisé en ce que** la solution à traiter comprend plus de 0,5g/L de cobalt, et de préférence plus de 1g/L.

5. Procédé selon l'une quelconque des revendications 1 à 4, **caractérisé en ce que** le sel de peroxomonosulfate est introduit sous forme liquide.

6. Procédé selon l'une quelconque des revendications 1 à 4, **caractérisé en ce que** le sel de peroxomonosulfate est introduit sous forme solide.

7. Procédé selon l'une quelconque des revendications précédentes, **caractérisé en ce que** le sel peroxomonosulfate est introduit à un débit allant de 0,1g/min/L_{solution à traiter} à 30g/min/L_{solution à traiter}, et de préférence de 1g/min/L_{solution à traiter} à 10g/min/L_{solution à traiter}.

8. Procédé selon l'une quelconque des revendications précédentes, **caractérisé en ce que** la température va de 20°C à 95°C, et de préférence de 40°C à 80°C.

9. Procédé selon l'une quelconque des revendications précédentes, **caractérisé en ce que** les ions additionnels sont des ions nickel.

10. Procédé selon l'une quelconque des revendications précédentes, **caractérisé en ce que** le sel de peroxomonosulfate est du peroxomonosulfate de potassium, et de préférence le sel triple de peroxomonosulfate de potassium.

11. Procédé selon l'une quelconque des revendications précédentes, **caractérisé en ce que** la solution à traiter est obtenue par dissolution d'une électrode de batterie Li-ion.
